# EUROPEAN PATENT APPLICATION

(11) **EP 4 443 016 A1**
(43) Date of publication of application: **09.10.2024**
(21) Application number: 23835396.5
(22) Date of filing: 28.06.2023
(51) Int. Cl.: F16C 33/58, F16C 19/06, F16C 33/64

(54) **ANTI-ELECTROLYTIC-CORROSION ROLLING BEARING**

(30) Priority: 04.07.2022 JP 2022107852; 12.07.2022 JP 2022111566
(71) Applicant: Nachi-Fujikoshi Corp., Tokyo 1050021 (JP)
(72) Inventor: IJIMA, Keiichi, Toyama-shi, Toyama 930-8511 (JP)
(74) Representative: Horn Kleimann Waitzhofer Schmid-Dreyer Patent- und Rechtsanwälte PartG mbB
(86) International application number: PCT/JP2023/023920
(87) International publication number: WO 2024/009864

(57) **Abstract**

The purpose of the present invention is to provide an anti-electrolytic corrosion rolling bearing capable of suitably suppressing the generation of a gap between an inner ring or outer ring and an insulating film, caused by a contraction during insert molding, and securing a superior anti-electrolytic corrosion effect. The configuration of this anti-electrolytic corrosion rolling bearing according to the present invention is characterized in that in the anti-electrolytic corrosion rolling bearing (bearing 100) in which a resin-made insulating film is formed on the surface of the inner ring or outer ring by insert molding, the inner circumferential surface 112 of the inner ring 110 or the outer circumferential surface 122 of the outer ring 120 has a groove 150 formed by laser processing, and the groove 150 is inclined in the depth direction thereof with respect to the inner circumferential surface 112 of the inner ring 110 or the outer circumferential surface 122 of the outer ring 120.

## Description

### TECHNICAL FIELD

The present invention relates to an anti-electrolytic corrosion rolling bearing effective for anti-electrolytic corrosion measures.

### BACKGROUND ART

In recent years, the number of high-voltage components mounted on one automobile tens to increase due to development of an electric car (EV car), a hybrid car (HV car), and the like. When a current of the high-voltage component is applied to a bearing, electrolytic corrosion occurs on a surface of a rolling element of a bearing and raceway surfaces of an outer ring and an inner ring, which causes damage. Therefore, for example, Patent Document 1 discloses an anti-electrolytic corrosion rolling bearing in which an insulating film is provided on a surface of a bearing ring. In Patent Document 1, the insulating film is formed of a polyphanylene sulfide resin containing glass fibers and a non-fibrous insulating inorganic filler.

In the rolling bearing of Patent Document 1, a plurality of circumferential grooves are formed on the surfaces of the inner ring and the outer ring, and the insulating film is overlaid on circumferential grooves. As a result, a ridge formed on the insulating film during the injection molding is fitted into a circumferential groove. Therefore, "axial displacement" of the film is prevented, and peeling and lifting during operation can be prevented.

### PRIOR ART(S)

### Patent Document

Patent Document 1: JP 3068311 B2

### SUMMARY OF INVENTION

### Technical Problem

As a method for forming an insulating film on an inner ring or an outer ring, insert molding exemplified in Patent Document 1 is generally used. However, when the insulating film is formed by insert molding, the insulating film contracts more than the inner ring and the outer ring during cooling due to a difference in thermal expansion coefficient between the inner ring or the outer ring and the insulating film. As such, a gap is generated between the inner ring or the outer ring and the insulating film. Then, an actual fastening allowance becomes smaller than a desired fastening allowance, and creep is likely to occur. Accordingly, the insulating film may wear out, ultimately leading to a decrease in insulation performance.

As a method of suppressing the generation of the gap between the inner ring or the outer ring and the insulating film at the time of cooling, forming a circumferential groove on the surface of the inner ring or the outer ring as in Patent Document 1 can be mentioned. However, Patent Document 1 considers "a load in an axial direction" during operation, and does not consider a force in a radial direction immediately after insert molding. In the circumferential groove formed by machining as in Patent Document 1, since the peeling direction and the depth direction of the groove are the same, a resin ridge (rib) formed in the groove comes out of the groove, and adhesion with the insulating film is low. Therefore, although the ridge formed on the insulating film have an effect of preventing axial displacement, the ridge easily comes out of the circumferential groove when contraction occurs during cooling, and the effect of suppressing generation of a gap between the inner ring or the outer ring and the insulating film cannot be sufficiently obtained.

In view of such problems, a purpose of the present invention is to provide an anti-electrolytic corrosion rolling bearing capable of suitably suppressing the generation of a gap between an inner ring or outer ring and an insulating film, caused by a contraction during insert molding, and securing a superior anti-electrolytic corrosion effect.

### Solution to Problem

In order to solve the above problems, a typical configuration of this anti-electrolytic corrosion rolling bearing according to the present invention is characterized in that in the anti-electrolytic corrosion rolling bearing in which a resin-made insulating film is formed on the surface of the inner ring or outer ring by insert molding, the inner circumferential surface of the inner ring or the outer circumferential surface of the outer ring has a groove formed by laser processing, and the groove is inclined in the depth direction thereof with respect to the inner circumferential surface of the inner ring or the outer circumferential surface of the outer ring.

Preferably, the groove is formed in a lattice shape on the inner circumferential surface of the inner ring or the outer circumferential surface of the outer ring.

Preferably, the groove includes a circumferential groove extending in the circumferential direction on both sides of the center of the bearing on the inner circumferential surface of the inner ring or the outer circumferential surface of the outer ring, and the circumferential groove is inclined toward the center in the depth direction.

Preferably, the groove is formed in a twill shape on the inner circumferential surface of the inner ring or the outer circumferential surface of the outer ring.

### ADVANTAGEOUS EFFECTS OF INVENTION

According to the present invention, it is possible to provide an anti-electrolytic corrosion rolling bearing capable of suitably suppressing a generation of a gap between an inner ring or outer ring and an insulating film, caused by a contraction during insert molding, and securing a superior anti-electrolytic corrosion effect.

### BRIEF DESCRIPTION OF THE DRAWINGS

Fig. 1 is a view for explaining an anti-electrolytic corrosion rolling bearing according to the present embodiment.
Fig. 2 is a partially enlarged view of an outer circumferential surface of an outer ring of Fig. 1.
Fig. 3 is an external perspective view of a bearing.
Fig. 4 is an external perspective view of a bearing.
Fig. 5 is a diagram for explaining a CAE analysis result of the bearing according to the present embodiment illustrated in Fig. 1.
Fig. 6 is a diagram illustrating a relationship between a laser processing depth and a gap generation rate.
Fig. 7 is a view illustrating an inner diameter measuring of a bearing of the present embodiment and a conventional bearing in a comparative example.
Fig. 8 is a view for explaining a conventional anti-electrolytic corrosion rolling bearing.

### DESCRIPTION OF EMBODIMENTS

Hereinafter, preferred embodiments of the present invention will be described in detail with reference to the accompanying drawings. Dimensions, shapes, materials, other specific numerical values, and the like shown in such embodiments are merely examples for facilitating understanding of the invention, and do not limit the present invention unless otherwise specified. Note that, in the present specification and the drawings, elements having substantially the same function and configuration are denoted by the same reference signs, and redundant description is omitted, and elements not directly related to the present invention are not illustrated or described.

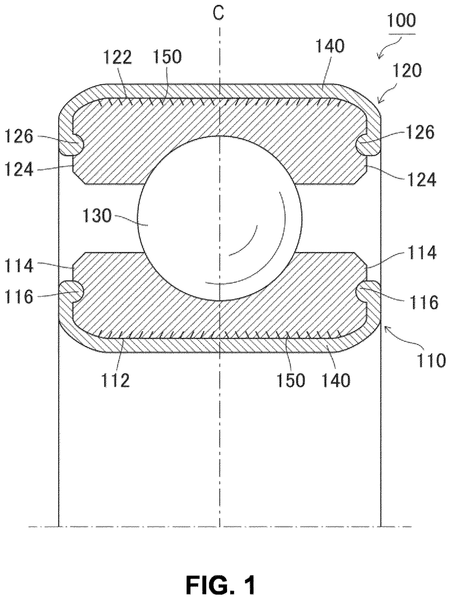

Fig. 1 is a diagram for explaining an anti-electrolytic corrosion rolling bearing (hereinafter, simply referred to as bearing 100) according to the present embodiment, and illustrates a cross section of a bearing 100. As shown in Fig. 1, in the present embodiment, a single-row deep groove ball bearing is exemplified as the bearing 100, which includes one row of balls as rolling elements 130 between the inner ring 110 and the outer ring 120.

The surface of the inner ring 110 includes an inner circumferential surface 112 and side surfaces 114 on both sides thereof, and the surface of the outer ring 120 includes an outer circumferential surface 122 and side surfaces 124 on both sides thereof. Resin-made insulating films 140 are formed on the surfaces of the inner ring 110 and the outer ring 120 by insert molding. Side grooves 116 and 126 are formed on the side surfaces 114 of the inner ring 110 and the side surfaces 124 of the outer ring 120, and each of the insulating films 140 becomes engaged with (is locked to) the side surfaces 114 of the inner ring 110 with the side grooves 116 or the side surfaces 124 of the outer ring 120 with the side grooves 126.

In the present embodiment, the configuration in which the insulating films 140 are formed on the surfaces of both the inner ring 110 and the outer ring 120 is exemplified, but the present invention is not limited thereto. The present invention can also be applied to a configuration in which the insulating film 140 is formed on any one of the inner ring 110 and the outer ring 120.

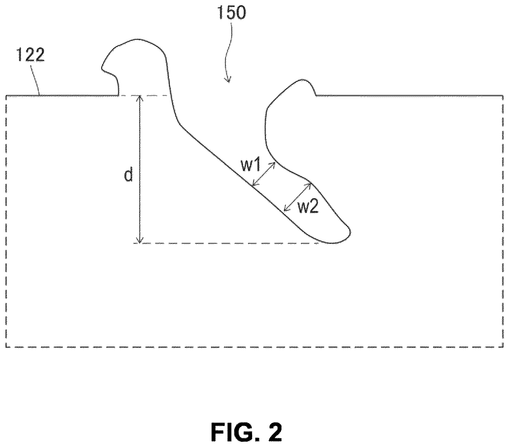

Fig. 2 is a partially enlarged view of the outer circumferential surface 122 of the outer ring 120 of Fig. 1. As illustrated in Figs. 1 and 2, as a feature of the present embodiment, grooves 150 formed by laser processing are provided in each of the inner circumferential surface 112 of the inner ring 110 and the outer circumferential surface 122 of the outer ring 120 (the outer circumferential surface 122 is illustrated in Fig. 2). Each of the grooves 150 is inclined with respect to the inner circumferential surface 112 of the inner ring 110 and the outer circumferential surface 122 of the outer ring 120 in the depth direction.

In particular, the groove 150 of the bearing 100 of the present embodiment is inclined toward a center C (see Fig. 1) of the bearing 100 in the axial direction. For this reason, as shown in Fig. 1, in the cross section of the bearing 100, the groove 150 has a "chevron shape symmetrical with respect to the center C", and the insulating film 140 that has entered inside the groove 150 so as to fill the groove 150 also has a "chevron shape symmetrical with respect to the center C", which is transferred from the shape of the groove 150.

According to the above configuration, when a force in a direction in which the insulating film 140 is peeled off from the inner circumferential surface 112 or the outer circumferential surface 122 is applied to the insulating film 140, the insulating film 140 becomes engaged with (is locked to) the groove 150. Therefore, coming out of the insulating film 140 from the groove 150 can be suitably suppressed, and adhesion between the insulating film 140 and the groove 150 is improved. Therefore, it is possible to suitably suppress the generation of a gap between the inner ring 110 or the outer ring 120 and the insulating film 140 caused by a contraction during insert molding, and secure a superior anti-electrolytic corrosion effect.

In addition, in the laser processing used for forming the groove 150 in the present embodiment, the groove width can be intentionally changed by adjusting the output of the laser. Therefore, by increasing the laser output at the time of forming the groove 150, it is possible to melt and evaporate portions more at deep positions of the inner circumferential surface 112 and the outer circumferential surface 122, and as illustrated in Fig. 2, a width W2 of the groove 150 at a deep position can be made larger than a width W1 of the groove 150 at a shallow position.

According to the above-described configuration, the insulating film 140, formed so as to fill the groove 150, transfers the shape of the groove 150, resulting in wider areas at deeper portions of the groove 150 compared to shallower portions thereof. Therefore, the insulating film 140 that has entered the groove 150 functions as a wedge (anchor effect), and the insulating film 140 is less likely to peel off from the groove 150. Accordingly, adhesion between the insulating film 140 and the groove 150 can be further enhanced.

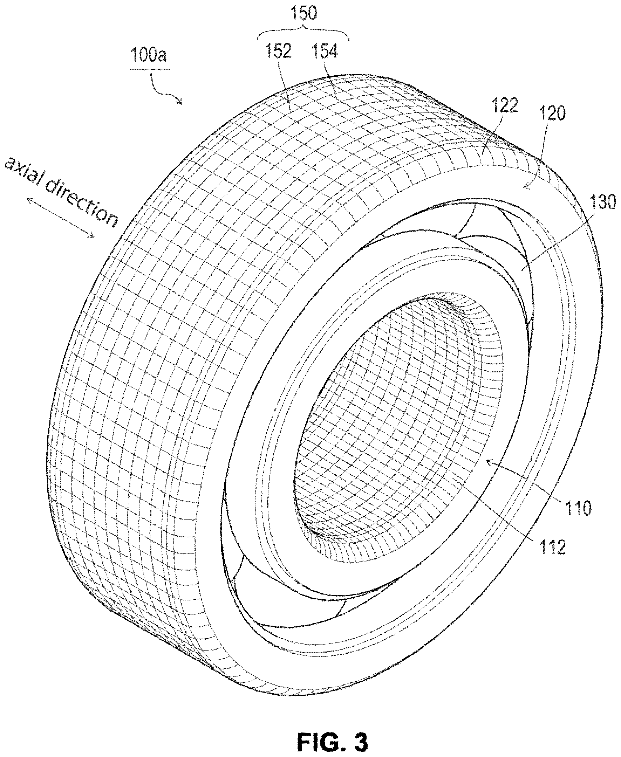

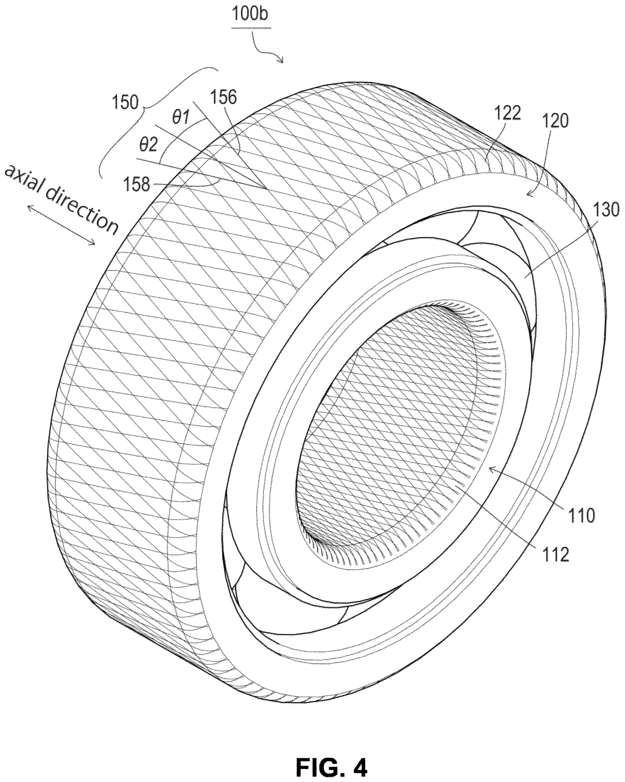

Figs. 3 and 4 are external perspective views of the bearing 100. In order to describe the shape of the groove 150, the insulating film 140 is not illustrated in Figs. 3 and 4. Components common to the bearing 100 are denoted by the same reference signs, and description thereof is omitted.

In a bearing 100a exemplified in Fig. 3, the grooves 150 are formed in a lattice shape (vertical and horizontal) on the inner circumferential surface 112 of the inner ring 110 and the outer circumferential surface 122 of the outer ring 120. That is, the grooves 150 include a plurality of circumferential grooves 152 extending in the circumferential direction on both sides of the center of the bearing 100a and a plurality of axial grooves 154 extending in the axial direction and intersecting with the circumferential grooves 152.

As illustrated in Fig. 3, since the lattice-shaped grooves including the circumferential grooves 152 and the axial grooves 154 are formed on the inner circumferential surface 112 of the inner ring 110 and the outer circumferential surface 122 of the outer ring 120, the contact area between the insulating film 140 and the inner surfaces of the grooves 150 can be increased, and the adhesion between them can be further improved.

Among the circumferential grooves 152 and the axial grooves 154 illustrated in Fig. 3, each of the circumferential grooves 152 (corresponding to the grooves 150 illustrated in Fig. 1) is inclined toward the center of the bearing 100a in the depth direction, so that the insulating film 140 becomes engaged with (is locked to) the grooves 150. Therefore, the above-described effect can be obtained.

In a bearing 100b exemplified in Fig. 4, the grooves 150 are formed in a twill (knurled) shape on the inner circumferential surface 112 of the inner ring 110 and the outer circumferential surface 122 of the outer ring 120. Specifically, the grooves 150 include a plurality of first inclined grooves 156 inclined by θ1 with respect to the axial direction and a plurality of second inclined grooves 158 inclined by θ2 with respect to the axial direction and intersecting with the first inclined grooves 156. With such a configuration, the contact area between the insulating film 140 and the inner surfaces of the grooves 150 also increases, so that the same effect as that of the bearing 100a of Fig. 3 can be obtained.

In a case where the grooves 150 are formed in a twill shape, the first inclined grooves 156 and the second inclined grooves 158 may not be inclined in the depth direction, the first inclined grooves 156 and the second inclined grooves 158 may be inclined in the same direction with respect to the circumferential direction, or may be inclined in different directions with respect to the circumferential direction.

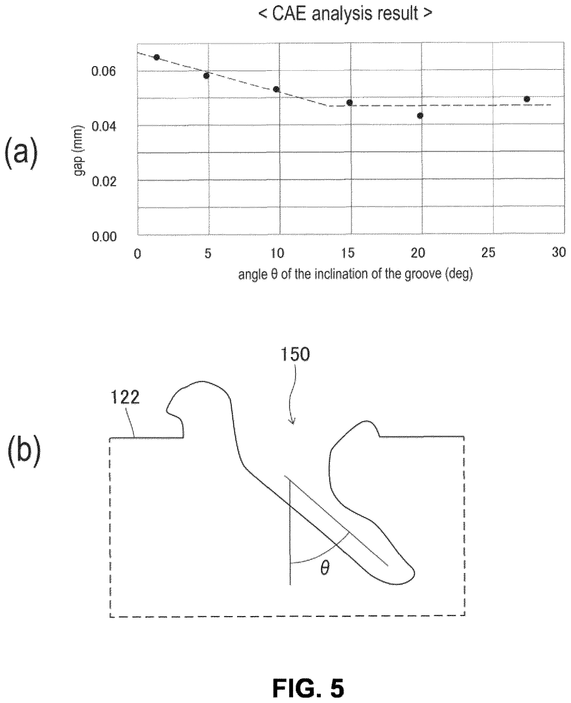

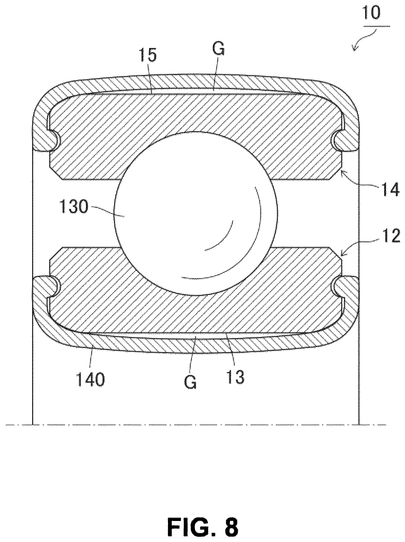

Figs. 5A is a diagram for explaining a CAE analysis result of the bearing according to the present embodiment illustrated in Fig. 1. Fig. 5B is a partially enlarged view of an outer circumferential surface of an outer ring of Fig. 1 illustrating that the horizontal axis is an angle θ of the inclination of the groove 150. The vertical axis represents a gap (see a gap G in Fig. 8) between the inner circumferential surface 112 of the inner ring 110 and the insulating film 140.

As illustrated in Fig. 5, the gap decreases as the inclination angle θ of the groove 150 decreases. When the angle θ of the groove 150 is 15 degrees, the gap is about 0.08 mm, and thereafter, the amount of the gap hardly changes even if the angle θ of the groove 150 further increases. Therefore, it can be understood that the effect of reducing the gap between the inner circumferential surface 112 of the inner ring 110 and the insulating film 140 can be reliably obtained by setting the inclination angle of the groove 150 to 15 degrees or more.

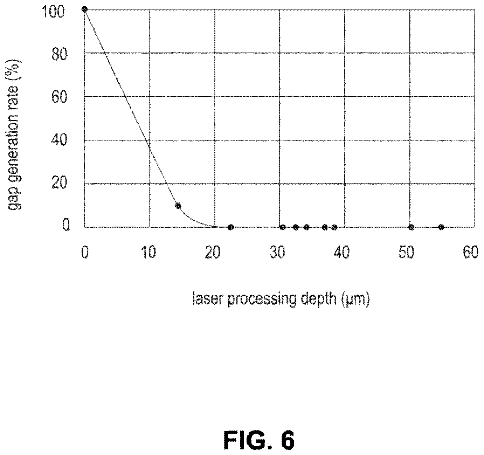

Fig. 6 is a diagram illustrating a relationship between a laser processing depth and a gap generation rate. In Fig. 6, the laser processing depth is exemplified as a groove depth d (see Fig. 2), illustrating the change in the gap generation rate between the insulating film 140 and the groove 150 when the laser processing depth is arranged.

As illustrated in Fig. 6, when the laser processing depth is 0 pm, that is, when laser processing is not performed, the gap generation rate is 100%, and the gap generation rate decreases as the laser processing depth increases. When the laser processing depth exceeds about 20 pm, the gap generation rate is 0%. From this, it can be understood that when the laser processing depth, that is, the depth of the groove 150 is 20 pm or more, generation of a gap between the insulating film 140 and the groove 150 can be suitably prevented.

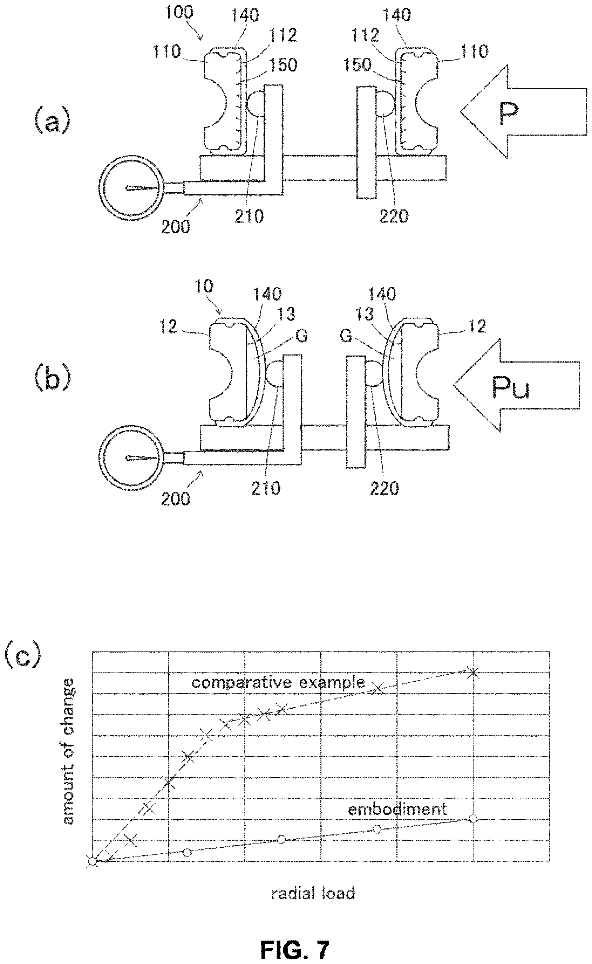

Fig. 7 is a view for explaining inner diameter measurement in the bearing 100 of the present embodiment and a conventional bearing 10 as a comparative example. Fig. 8 is a view for explaining a conventional anti-electrolytic corrosion rolling bearing (hereinafter, referred to as bearing 10). Note that components common between the bearing 100 of the present embodiment and the conventional bearing 10 are denoted by the same reference signs.

Fig. 7A is a view illustrating an arrangement of the present embodiment when measuring the inner diameter of the inner ring 110 of the bearing 100. Fig. 7B is a view illustrating an arrangement of the comparative example when measuring an inner ring 12 of the conventional bearing 10. In the bearing 100 of the present embodiment illustrated in Fig. 7A, the insulating film 140 and the inner ring 110 are in close contact with each other.

As illustrated in Fig. 8, in the conventional bearing 10, an inner circumferential surface 13 of the inner ring 12 and an outer circumferential surface 15 of an outer ring 14 are not provided with the grooves 150 and are in a flat state. When the insulating film 140 is formed on the surfaces of the inner ring 12 and the outer ring 14 of the conventional bearing 10 by insert molding, the insulating film 140 is peeled off from the inner circumferential surface 13 of the inner ring 12 and the outer circumferential surface 15 of the outer ring 14 due to contraction at the time of releasing. Therefore, in the conventional 10, as illustrated in Figs. 7B and 8, the gap G is generated between the insulating film 140 and the inner ring 12.

When the inner diameter of the inner ring is measured by an inner diameter measuring device 200, as illustrated in Fig. 7A, a movable terminal 210 and a fixed terminal 220 are disposed between the inner rings 110 of the present embodiment and between the conventional inner rings 12. By applying a load to the movable terminal 210, the movable terminal 210 moves toward the fixed terminal 220.

Fig. 7C is a diagram illustrating a relationship between the radial load and the amount of change in the inner diameter of the inner ring. As illustrated in Fig. 7C, in the comparative example (the inner ring 12 of the conventional bearing 10), the amount of movement of the movable terminal 210 significantly increases as the load (radial load) applied from the movable terminal 210 increases.

In contrast, in the embodiment (the inner ring 110 of the bearing 100 of the present embodiment), the amount of movement of the movable terminal 210 gradually increases as the load (radial load) applied from the movable terminal 210 increases, but when the radial load is a predetermined value L, the amount of change in the movable terminal 210 is about 1/4 of the amount of change of the comparative example. From this, it can be understood that a shape of the insulating film of the comparative example is unstable and a desired shape has not been obtained. According to the bearing 100 of the present embodiment, the insulating film 140 has a shape following the shape of the inner circumferential surface 112 of the inner ring 110, and a stable shape can be maintained when a load is applied.

Although the preferred embodiments of the present invention have been described above with reference to the accompanying drawings, it goes without saying that the present invention is not limited to such examples. It will be apparent to those skilled in the art that various changes or modifications can be conceived within the scope described in the claims, and it is understood that these naturally belong to the technical scope of the present invention.

### INDUSTRIAL APPLICABILITY

The present invention can be used as an anti-electrolytic corrosion rolling bearing effective for anti-electrolytic corrosion measures.

### LIST OF REFERENCE NUMERALS

- 10: Bearing
- 12: Inner ring
- 13: Inner circumferential surface
- 14: Outer ring
- 15: Outer circumferential surface
- 100: Bearing
- 100a: Bearing
- 100b: Bearing
- 110: Inner ring
- 112: Inner circumferential surface
- 114: Side surface
- 116: Side surface groove
- 120: Outer ring
- 122: Outer circumferential surface
- 124: Side surface
- 126: Side surface groove
- 130: Rolling element
- 140: Insulating film
- 150: Groove
- 152: Circumferential groove
- 154: Axial groove
- 156: First inclined groove
- 158: Second inclined groove
- 210: Movable terminal
- 220: Fixed terminal
- G: Gap

## Claims

1. An anti-electrolytic corrosion rolling bearing in which a resin-made insulating film is formed on a surface of an inner ring or an outer ring by insert molding, wherein
a groove is formed on an inner circumferential surface of the inner ring or an outer circumferential surface of the outer ring by laser processing, and
the groove is inclined in a depth direction with respect to the inner circumferential surface of the inner ring or the outer circumferential surface of the outer ring.

2. The anti-electrolytic corrosion rolling bearing according to claim 1, wherein
the groove is formed in a lattice shape on the inner circumferential surface of the inner ring or the outer circumferential surface of the outer ring.

3. The anti-electrolytic corrosion rolling bearing according to claim 2, wherein
the groove includes a circumferential groove extending in a circumferential direction on both sides of a center of the bearing on the inner circumferential surface of the inner ring or the outer circumferential surface of the outer ring, and
the circumferential groove is inclined toward the center in the depth direction.

4. The anti-electrolytic corrosion rolling bearing according to claim 1, wherein the groove is formed in a twill shape on the inner circumferential surface of the inner ring or the outer circumferential surface of the outer ring.
